# EUROPEAN PATENT APPLICATION

(11) **EP 4 628 741 A1**
(43) Date of publication of application: **08.10.2025**
(21) Application number: 23897392.9
(22) Date of filing: 06.11.2023
(51) Int. Cl.: F16C 33/41, B29C 33/42, B29C 45/00, B29C 45/27, F16C 19/06

(54) **RETAINER, RETAINER MANUFACTURING METHOD, ROLLING BEARING, AND MOLD**

(30) Priority: 28.11.2022 JP 2022188976
(71) Applicant: Minebea Mitsumi Inc., Kitasaku-gun, Nagano 3890293 (JP)
(72) Inventor: NAKAMURA, Toru, Kitasaku-gun Nagano 389-0293 (JP); SHIN, Wonji, Kitasaku-gun Nagano 389-0293 (JP)
(74) Representative: Regimbeau
(86) International application number: PCT/JP2023/039942
(87) International publication number: WO 2024/116738

(57) **Abstract**

A retainer (5) of a rolling bearing includes a base (51) extending annularly in a circumferential direction around an axis line (x), a plurality of columns (52) extending from the base (51) along the axis line (x) and arrayed in the circumferential direction, a plurality of pockets (53) each formed between a pair of columns (52) adjacent to each other, a reduced thickness part (55) formed at the base (51) and being a part recessed from the base (51) or the column (52) toward an inside of the column (52) at a position corresponding to the column (52), and a plurality of gate marks (54A to 54E) formed at the column (52) or the base (51) adjacent to the column (52) in correspondence with a gate position in molding the retainer (5). At least one of the plurality of gate marks (54A to 54E) is formed at the column (52) or the base (51) adjacent to the column (52) corresponding to the reduced thickness part (55).

## Description

### Technical Field

The present invention relates to a retainer, a method for manufacturing the retainer, a rolling bearing, and a mold.

### Background Art

For example, a rolling bearing is incorporated in a motor. A rolling bearing includes an inner ring, an outer ring disposed at an outer side of the inner ring, a plurality of rolling elements disposed between the inner ring and the outer ring, and a retainer having a plurality of pockets, each configured to accommodate the rolling element. The retainer is formed by, for example, injection molding from a resin material. Patent Documents 1 and 2 disclose a technique for adjusting the position of a weld line by providing a retainer with a reduced thickness part and making a difference in the fluid volume of a molten resin material flowing in from a gate.

### Citation List

### Patent Documents

Patent Document 1: Japanese Utility Model Application Laid-Open No. 60-71728
Patent Document 2: Japanese Patent Application Laid-Open No. 2014-87941

### Summary of Invention

### Technical Problem

In the known retainer, the position of the weld line described above can be shifted from the position corresponding to the bottom part of the pocket being the thin thickness part by utilizing the technique of adjusting the position of the weld line. As described above, in the known rolling bearing, a configuration capable of suppressing a decrease in strength of the retainer is required.

The present invention has been made in view of the above problems, and an object of the present invention is to provide a retainer, a method for manufacturing the retainer, a rolling bearing, and a mold capable of suppressing decrease in strength of the retainer.

### Solution to Problem

In order to achieve the above object, a retainer according to a first aspect of the present invention is a retainer for a rolling bearing, the retainer including a base extending annularly in a circumferential direction around an axis line, a plurality of columns extending from the base along the axis line and arrayed in the circumferential direction, a plurality of pockets each formed between a pair of the columns adjacent to each other, a reduced thickness part being a part recessed from the base or the column toward the inside of the column at a position corresponding to the column, and a plurality of gate marks formed at the column or the base adjacent to the column in correspondence with gate positions in molding the retainer, wherein at least one of the plurality of gate marks is formed at the column or the base adjacent to the column corresponding to the reduced thickness part.

A rolling bearing according to a second aspect of the present invention includes an inner ring, an outer ring disposed at an outer side of the inner ring, a plurality of rolling elements disposed between the inner ring and the outer ring, and the retainer described above, the retainer accommodating each of the plurality of rolling elements at the pocket between the inner ring and the outer ring.

A method for manufacturing a retainer according to a third aspect of the present invention includes injecting a resin material from a plurality of gates into a cavity of a mold imitating an outer shape of a retainer of a rolling bearing, and curing the resin material within the cavity to form the retainer, wherein the cavity imitates outer shapes of a base extending annularly in a circumferential direction around an axis line, a plurality of columns extending from the base along the axis line and arrayed in the circumferential direction, a plurality of pockets each formed between a pair of the columns adjacent to each other, and a reduced thickness part recessed from the base or the column toward an inside of the column at a position corresponding to the column, and each of the plurality of gates is disposed at the column or the base adjacent to the column, and at least one of the plurality of gates is formed at the column or the base adjacent to the column corresponding to an outer shape of the reduced thickness part.

A mold according to a fourth aspect of the present invention is a mold for defining a cavity imitating an outer shape of a retainer of a rolling bearing, wherein the cavity imitates outer shapes of a base extending annularly in a circumferential direction around an axis line, a plurality of columns extending from the base along the axis line and arrayed in the circumferential direction, a plurality of pockets each formed between a pair of the columns adjacent to each other, and a reduced thickness part recessed from the base or the column toward an inside of the column at a position corresponding to the column, a plurality of gates each being connected to the cavity at a position corresponding to a different one of the plurality of columns, and at least one of the plurality of gates is formed at the column or the base adjacent to the column corresponding to an outer shape of the reduced thickness part.

### Advantageous Effects of Invention

According to the present invention, a retainer, a method for manufacturing the retainer, a rolling bearing, and a mold capable of suppressing decreasing in strength of the retainer can be provided.

### Brief Description of Drawings

FIG. 1 is a partial cross-sectional view schematically illustrating a structure of a rolling bearing 1 according to an embodiment of the present invention.
FIG. 2 is a plan view schematically illustrating a structure of a retainer 5 according to a first specific example of the present invention.
FIG. 3 is a perspective view schematically illustrating the structure of the retainer 5 according to the first specific example of the present invention.
FIG. 4 is a partially enlarged side view schematically illustrating the structure of the retainer 5 according to the first specific example of the present invention.
FIG. 5 is a perspective view schematically illustrating the structure of the retainer 5 according to the first specific example of the present invention.
FIG. 6 is a bottom view schematically illustrating the structure of the retainer 5 according to the first specific example of the present invention.
FIG. 7 is a partial cross-sectional view taken along line 7-7 in FIG. 6.
FIG. 8 is a view schematically illustrating a structure of a mold 100 for manufacturing the retainer 5 according to the first specific example of the present invention.
FIG. 9 is a perspective view illustrating the outer shapes of the cavity 101 and the gate 110D of the mold 100 for manufacturing the retainer 5 according to the first specific example of the present invention.
FIG. 10 is a bottom view schematically showing a structure of a retainer 5A according to a second specific example of the present invention.
FIG. 11 is a perspective view schematically illustrating a structure of the retainer 5A according to the second specific example of the present invention.
FIG. 12 is a view schematically illustrating a structure of a mold 100A for manufacturing the retainer 5A according to the second specific example of the present invention.
FIG. 13 is a bottom view illustrating the outer shapes of the cavity 101 and the gate 110D of the mold 100 for manufacturing the retainer 5A according to the second specific example of the present invention.
FIG. 14 is a bottom view schematically illustrating a structure of a retainer 5B according to a third specific example of the present invention.
FIG. 15 is a view schematically illustrating a structure of a mold 100B for manufacturing the retainer 5B according to the third specific example of the present invention.
FIG. 16 is a bottom view schematically illustrating a structure of a retainer 5C according to a fourth specific example of the present invention.
FIG. 17 is a view schematically illustrating a structure of a mold 100C for manufacturing the retainer 5C according to the fourth specific example of the present invention.

### Description of Embodiments

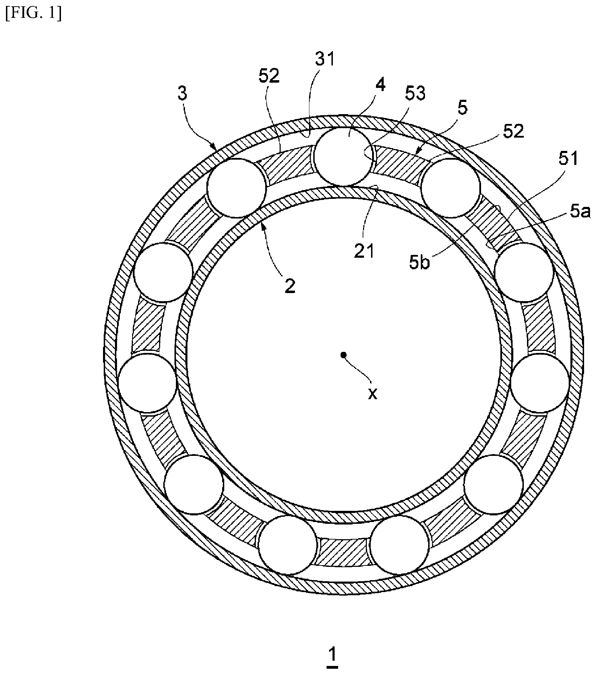

An embodiment of the present invention will be described below with reference to the drawings. FIG. 1 is a partial cross-sectional view schematically illustrating a structure of a rolling bearing 1 according to an embodiment of the present invention. The rolling bearing 1 includes an inner ring 2, an outer ring 3 disposed outside the inner ring 2, a plurality of rolling elements 4 disposed between the inner ring 2 and the outer ring 3, and a retainer 5 configured to hold the plurality of rolling elements 4. Each of the inner ring 2, the outer ring 3, and the retainer 5 is an annular member having the axis line x as a center axis or a substantially center axis. The axis line x is an axis line of the rolling bearing 1. Note that in FIG. 1, the rolling bearing 1 in plan view is illustrated in a state with the rolling elements 4 shown by cutting the inner ring 2, the outer ring 3, and the retainer 5. In the rolling bearing 1, for example, the outer ring 3 is fixed to a housing of a motor (not illustrated), and the inner ring 2 is fixed to a shaft of the motor, so that the inner ring 2 and the outer ring 3 can relatively rotate about the axis line x.

A raceway groove 21 is formed at the outer circumferential surface of the inner ring 2 in the radial direction orthogonal to the axis line x, and a raceway groove 31 is similarly formed at the inner circumferential surface of the outer ring 3 in the radial direction. The plurality of rolling elements 4 are arrayed in the circumferential direction around the axis line x between the raceway groove 21 and the raceway groove 31. The rolling elements 4 are spheres (balls), and thus the rolling bearing 1 is a rolling ball bearing. The inner ring 2 and the outer ring 3 are formed of, for example, stainless steel. The rolling elements 4 are formed of, for example, stainless steel or ceramic. The retainer 5 is formed of, for example, a resin material. A lubricant (not illustrated) such as grease is filled between the inner ring 2 and the outer ring 3. The lubricant reduces friction between the rolling elements 4 and the inner ring 2, the outer ring 3, and the retainer 5. The rolling bearing 1 may include a pair of shield members (not illustrated) configured to seal a space between the inner ring 2 and the outer ring 3 in order to avoid leakage of lubricant from the rolling bearing 1 to the outside and intrusion of foreign matter into the rolling bearing 1.

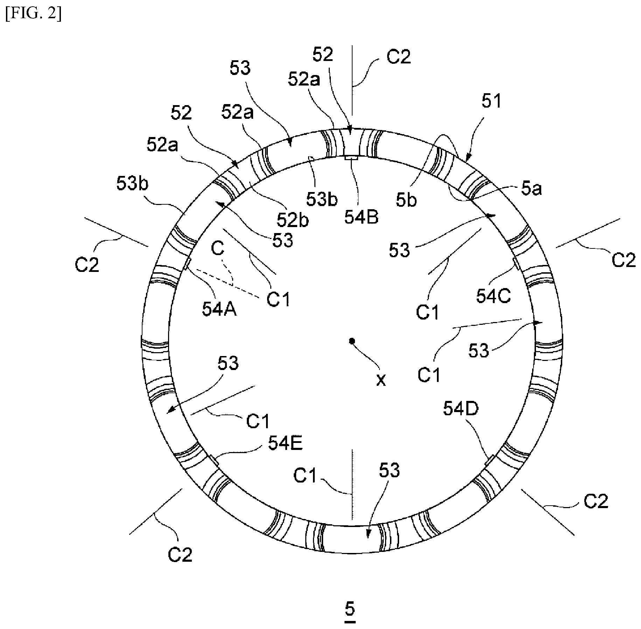

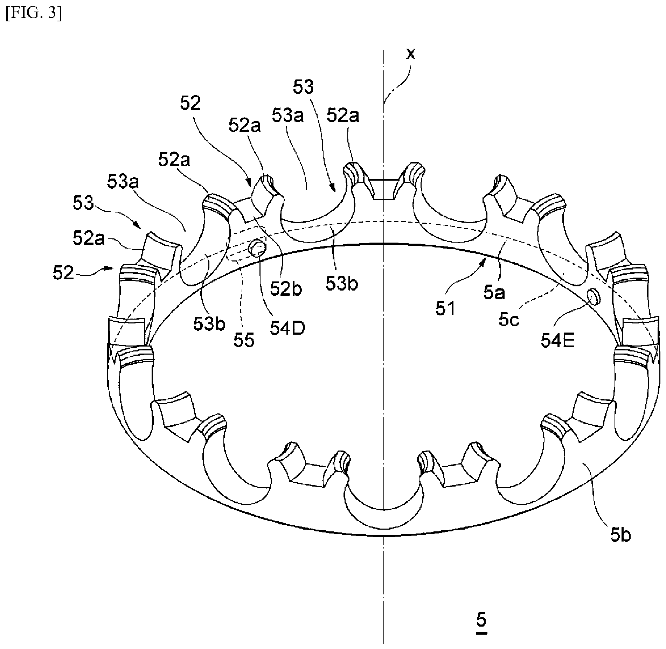

FIG. 2 is a plan view schematically illustrating the structure of the retainer 5 according to a first specific example of the present invention, and FIG. 3 is a perspective view schematically illustrating the structure of the retainer 5 according to the first specific example of the present invention. FIG. 3 is a perspective view when the retainer 5 is viewed from one side (upper side) in the axis line x direction. Referring to FIGS. 1 to 3 together, the retainer 5 defines an inner circumferential surface 5a facing the radially inner side of the retainer 5, an outer circumferential surface 5b facing the radially outer side of the retainer 5, and a bottom surface 5c defined on the other side (lower side) in the axis line x direction and extended along a virtual plane orthogonal to the axis line x. As is apparent from FIG. 1, the diameter of the inner circumferential surface 5a is larger than the diameter of the outer circumferential surface of the inner ring 2, and the diameter of the outer circumferential surface 5b is smaller than the diameter of the inner circumferential surface of the outer ring 3.

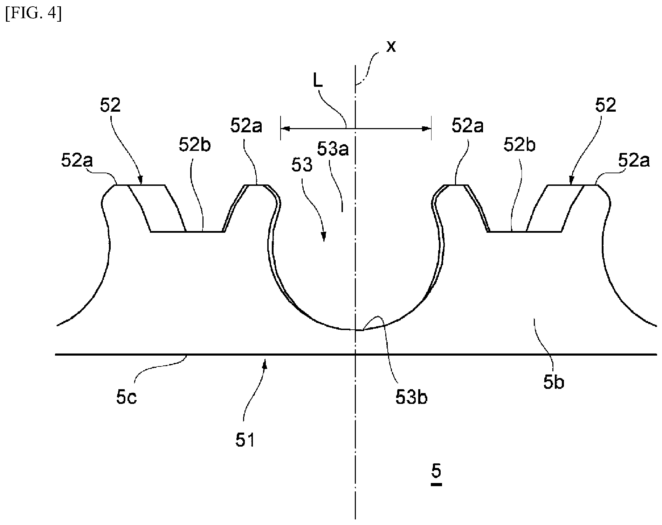

FIG. 4 is a partially enlarged side view schematically illustrating the structure of the retainer 5 according to the first specific example of the present invention. Referring also to FIG. 4, the retainer 5 includes an annular base 51 having the axis line x as a center axis, a plurality of columns 52 extending from the base 51 along the axis line x and being arrayed at intervals in the circumferential direction, and a plurality of pockets 53 each formed between a pair of columns 52 adjacent to each other. In the present embodiment, for example, 11 columns 52 and 11 pockets 53 are alternately arrayed in the circumferential direction. Each column 52 constitutes a thick thickness part of the retainer 5. Each column 52 includes a pair of claw parts 52a and 52a protruding along the axis line x and a grease pocket 52b formed between the claw parts 52a and 52a. The pocket 53 is opened between one claw part 52a of one column 52 and the other claw part 52a of the column 52 adjacent in the circumferential direction the relevant column 52. The grease pocket 52b holds the lubricant described above to promote reduction of friction between the rolling element 4 and the inner ring 2, the outer ring 3, and the retainer 5.

Each pocket 53 is recessed along the axis line x. Each pocket 53 extends from the inner circumferential surface 5a to the outer circumferential surface 5b of the retainer 5 along the radial direction. The rolling element 4 is accommodated in each pocket 53. The pocket 53 is opened at an open part 53a defined at one side (upper side) in the axis line x direction. The open part 53a is formed between the pair of claw parts 52a and 52a. The length of the open part 53a in the circumferential direction is defined to be, for example, smaller than the diameter of the rolling element 4. Each pocket 53 further defines a spherical surface 53b facing the spherical surface of the rolling element 4. The spherical surface 53b is defined from, for example, a spherical surface partially facing the outer circumferential surface of the rolling element 4 around the center of the rolling element 4. The spherical surface 53b is formed deepest at the center position C1 of the pocket 53 defined in the circumferential direction (see FIG. 2). In other words, the center position C1 of the pocket 53 forms a thin thickness part being the thinnest thickness part at the retainer 5.

As illustrated in FIGS. 2 and 3, the retainer 5 further includes a plurality of, in the present embodiment, five gate marks 54A to 54E arrayed at the inner circumferential surface 5a in the circumferential direction around the axis line x. The gate marks 54A to 54E are formed at positions corresponding to gate positions at the time of molding the retainer 5. As described later, the gate marks 54A to 54E are irregularities imitating the shape of the distal end of the gate when the gate is separated from the molded body of the retainer 5 taken out from the mold used for molding the retainer 5. The shapes of the gate marks 54A to 54E change in response to the shape of the distal end of the gate, but in the present embodiment, the gate marks are formed in, for example, a flat columnar shape. The gate marks 54A to 54E are formed at the inner circumferential surface 5a of the retainer 5 in the column 52 or the base 51 adjacent to the column 52. Note that each of the gate marks 54A to 54E may be formed at the outer circumferential surface 5b of the retainer 5 in the column 52 or the base 51 adjacent to the column 52. From the viewpoint of moldability, each of the gate marks 54A to 54E is preferably formed at the column 52 side. As is apparent from FIG. 2, the center C, in the circumferential direction, of each of the gate marks 54A to 54E coincides with the center position C2 of the column 52 defined in the circumferential direction. An even number of, that is, two pockets 53 are arranged between each of the pair of gate marks 54E and 54A, the pair of gate marks 54A and 54B, the pair of gate marks 54B and 54C, and the pair of gate marks 54C and 54D adjacent to each other in the circumferential direction. On the other hand, an odd number of, that is, three pockets 53 are arranged between the pair of gate marks 54D and 54E adjacent to each other in the circumferential direction.

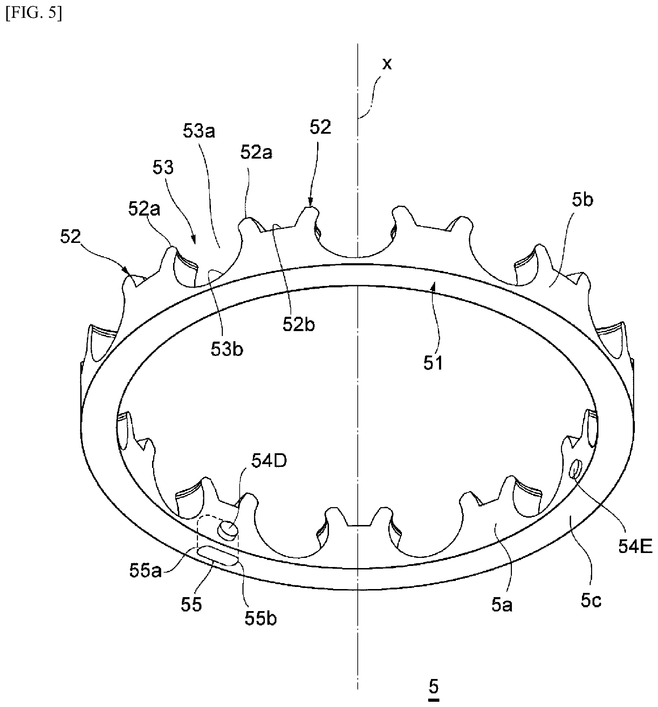

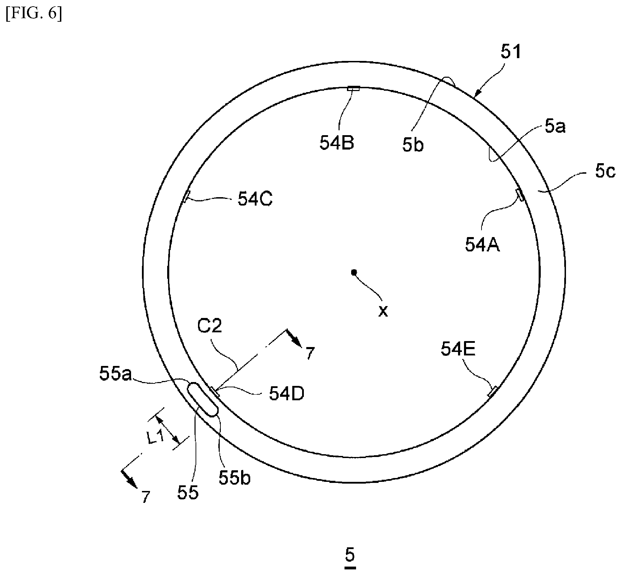

FIG. 5 is a perspective view schematically illustrating the structure of the retainer 5 according to a first specific example of the present invention, and FIG. 6 is a bottom view schematically illustrating the structure of the retainer 5 according to the first specific example of the present invention. FIG. 5 is a perspective view of the retainer 5 as viewed from the other side (lower side) in the axis line x direction. Referring also to FIGS. 3, 5, and 6, the retainer 5 further includes a reduced thickness part 55 being a part recessed from the bottom surface 5c, that is, the base 51 of the retainer 5 toward the inside of the base 51 and the column 52 at a position corresponding to the column 52 in the circumferential direction. In the present embodiment, the reduced thickness part 55 is formed at a position corresponding to the column 52 with the gate mark 54D formed. As is apparent from FIG. 6, the reduced thickness part 55 includes a circumferential end part (first circumferential end part) 55a and a circumferential end part (second circumferential end part) 55b defined in the circumferential direction, and extends between the circumferential end part 55a and the circumferential end part 55b in the circumferential direction by a predetermined circumferential length L1. In the circumferential direction, the center of the reduced thickness part 55 coincides with the center position C2 of the column 52. That is, the center of the reduced thickness part 55 also coincides with the center of the gate mark 54E in the circumferential direction. Note that the reduced thickness part 55 may be a part recessed not from the base 51 but from the column 52 toward the inside of the column 52. That is, the reduced thickness part 55 may be recessed from the inner circumferential surface 5a or the outer circumferential surface 5b of the retainer 5 toward the inside of the column 52 in the column 52.

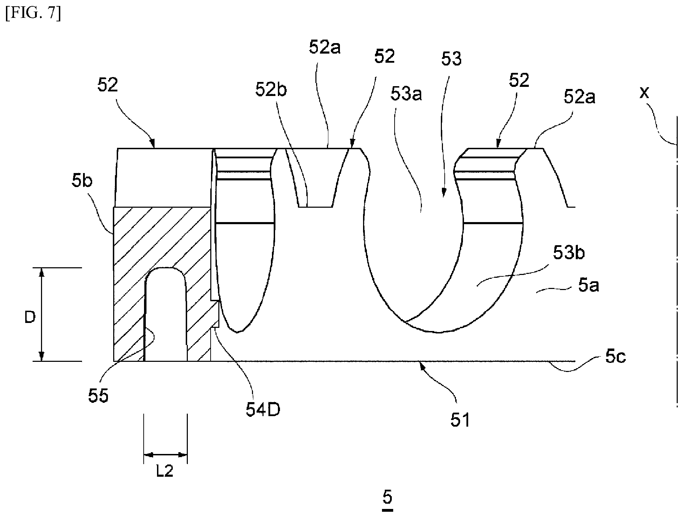

FIG. 7 is a partial cross-sectional view taken along line 7-7 of FIG. 6. As illustrated in FIG. 7, the reduced thickness part 55 has a predetermined depth D from the bottom surface 5c toward one side (upper side) in the axis line x direction. In the present embodiment, the depth D is set to, for example, about half the height of the retainer 5 from the bottom surface 5c in the axis line x direction. In addition, the radial length L2 of the reduced thickness part 55 defined in the radial direction is set to, for example, about half of the length from the inner circumferential surface 5a to the outer circumferential surface 5b similarly defined in the radial direction. On the other hand, the gate mark 54D formed at the inner circumferential surface 5a in the column 52 or the base 51 adjacent to the column 52 faces the inner circumferential surface of the reduced thickness part 55 in the radial direction. In the present embodiment, the gate marks 54A to 54E are entirely disposed at the column 52. The gate marks 54A to 54C and 54E are arranged in the same manner as the gate mark 54D. Note that it is preferable that the reduced thickness part 55 has a circumferential length L1 larger than a radial length L2, that is, has a shape elongated in the circumferential direction.

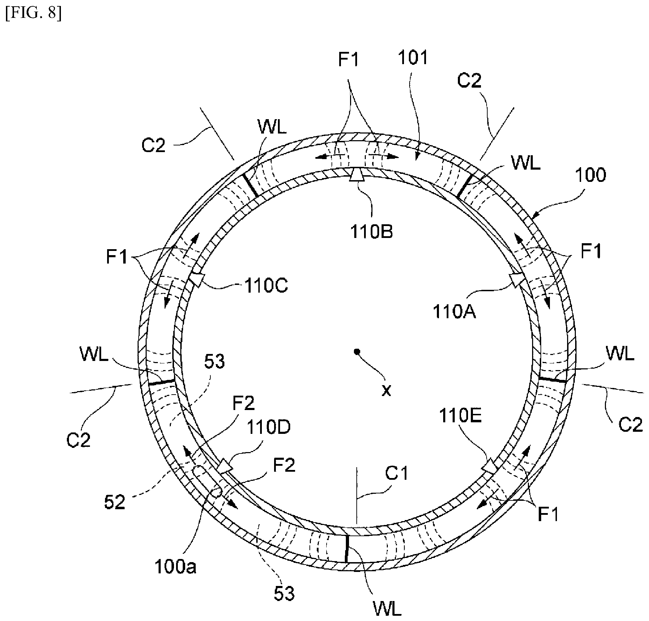

Next, a method for manufacturing the retainer 5 according to the first specific example of the present invention will be described. Injection molding is performed in manufacturing the retainer 5. FIG. 8 is a view schematically illustrating a structure of a mold 100 for manufacturing the retainer 5 according to the first specific example of the present invention. FIG. 8 is a partial perspective cross-sectional view when the shape of the cavity 101 formed in the mold 100 is viewed from the other side (lower side) of the axis line x. The cavity 101 forms a void extending annularly in the circumferential direction around the axis line x. The axis line x is a center axis or a substantially center axis of the annular cavity 101, and coincides with a center axis of the retainer 5 manufactured by the mold 100. The cavity 101 coincides with the outer shapes of the base 51, the column 52, the pocket 53, and the reduced thickness part 55 of the retainer 5. The mold 100 combines a plurality of molds to form the cavity 101, but the detailed description on the combination of molds is omitted.

A plurality of, in the present embodiment, five gates 110A to 110E are connected to the cavity 101 of the mold 100. The gates 110A to 110E are arrayed in the circumferential direction around the axis line x. The positions of the gates 110A to 110E in the circumferential direction coincide with the positions of the gate marks 54A to 54E of the retainer 5, respectively. The mold 100 includes a protruding part 100a protruding from an inner surface of the mold 100 toward the inside of the cavity 101 along the axis line x. The protruding part 100a conforms to the outer shape of the reduced thickness part 55. The gate 110D faces the protruding part 100a of the mold 100 in a radial direction orthogonal to the axis line x. Here, for the sake of convenience of description, only the protruding part 100a imitating the outer shape of the reduced thickness part 55 will be denoted by reference numerals, but the cavity 101 conforms to the outer shapes of the base 51, the column 52, and the pocket 53 as described above. In the present embodiment, the gates 110A to 110E are disposed in the column 52, and the gate 110D is disposed in the column 52 corresponding to the outer shape of the reduced thickness part 55.

In manufacturing, the molten resin material is injected into the cavity 101 from each of the gates 110A to 110E at substantially the same time at a predetermined flow speed. Taking the pair of gates 110A and 110B as an example, the first flow F1 of the molten resin material flowing in from the gate 110A flows in toward the gates 110B and 110E in the circumferential direction. Similarly, the first flow F1 of the molten resin material flowing from the gate 110B flows in toward the gates 110A and 110C in the circumferential direction. As a result, between the pair of gates 110A and 110B, the first flow F1 of the molten resin material merges at a position equidistant from the gate 110A and the gate 110B in the circumferential direction. The merging position of the molten resin material corresponds to the position of a so-called weld line. The flow of the molten resin material is similar between the pair of gates 110B and 110C and between the pair of gates 110E and 110A.

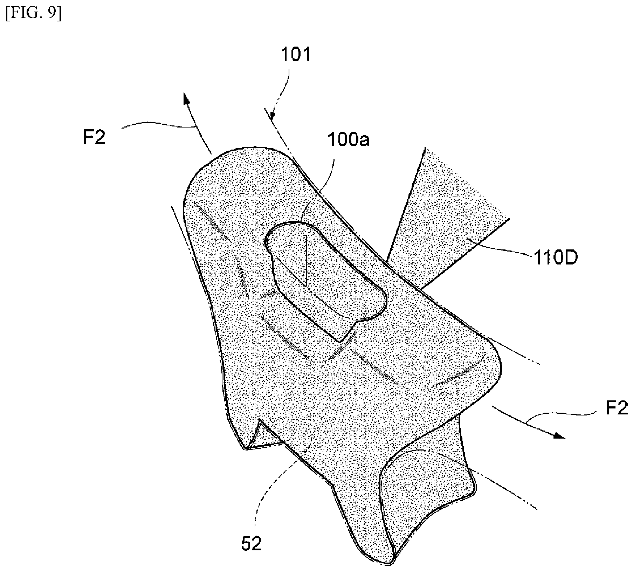

FIG. 9 is a perspective view illustrating the outer shapes of the cavity 101 and the gate 110D of the mold 100 for manufacturing the retainer 5 according to the first specific example of the present invention. FIG. 9 illustrates the gate 110D and the protruding part 100a when viewed from the other side (lower side) of the axis line x in a partially enlarged manner. Referring also to FIG. 9, the molten resin material flowing into the cavity 101 from the gate 110D first collides with the inner circumferential surface of the protruding part 100a. Due to the presence of the protruding part 100a, the cross-sectional area of the inflow path of the molten resin material from the gate 110D in the cavity 101 is smaller than the cross-sectional area of the inflow path of the molten resin material from the gates 110A to 110C and 110E with no protruding part 100a formed. Therefore, the protruding part 100a of the mold 100 becomes a resistance against the inflow of the molten resin material in the cavity 101.

As a result, the second flow F2 of the molten resin material flowing into the cavity 101 from the gate 110D is less likely to flow than the first flow F1 of the molten resin material flowing into the cavity 101 from the gates 110A to 110C and 110E described above. Therefore, between the gate 110D and the gate 110C, the first flow F1 of the molten resin material flowing from the gate 110C toward the gate 110D merges with the second flow F2 of the molten resin material from the gate 110D toward the gate 110C at a position deviated toward the gate 110D side in the circumferential direction. Similarly, between the gate 110D and the gate 110E, the first flow F1 of the molten resin material from the gate 110E toward the gate 110D merges with the second flow F2 of the molten resin material from the gate 110D toward the gate 110E at a position deviated toward the gate 110D side in the circumferential direction. Thereafter, the resin material is cured in the mold 100, and the molded body of the retainer 5 including the gates 110A to 110E is removed from the mold 100. Thereafter, the gates 110A to 110E are separated from the molded body of the retainer 5. Thus, the retainer 5 is manufactured from the mold 100.

Here, FIG. 8 illustrates the position of the weld line WL obtained by the simulation result performed on the software based on the conditions similar to the conditions of the above-described manufacturing method. Between the pair of gates 110A and 110B, between the pair of gates 110B and 110C, and between the pair of gates 110E and 110A, adjacent to each other in the circumferential direction, the first flow F1 of the molten resin material flowed in from the gates 110A to 110C and 110E, and the weld line WL was disposed at a position substantially equidistant from each of the respective gates 110A to 110C and 110E in the circumferential direction. Since an even number of, that is, two pockets 53 are disposed between the gates 110A to 110C and 110E, the weld line WL substantially coincides with the center position C2 of the column 52 in the circumferential direction. That is, the weld line WL was formed at a position corresponding to the column 52 being a thick thickness part at the retainer 5. An even number of, that is, two pockets 53 are arranged between the pair of gates 110C and 110D adjacent to each other in the circumferential direction. Due to the difference in the flowability of the molten resin material between the pair of gates 110C, 110D (the second flow F2 is harder to flow than the first flow F1), the weld line WL was disposed at a position deviated from the center position C2 of the column 52 toward the gate 110D side in the circumferential direction. However, the weld line WL substantially coincides with the center position C2 of the column 52.

On the other hand, an odd number of, that is, three pockets 53 are disposed between a pair of gates 110D and 110E adjacent to each other in the circumferential direction. Due to a difference in flowability of the molten resin material between the pair of gates 110D and 110E (the second flow F2 is harder to flow than the first flow F1), the weld line WL was disposed at a position deviated toward the gate 110D side in the circumferential direction. That is, the equidistance from the pair of gates 110D and 110E was the center position C1 in the circumferential direction of the middle pocket 53 among the three pockets 53, and the weld line WL was disposed deviated from the center position C1 toward the gate 110D side. Therefore, the weld line WL was arranged shifted from the center position C1 of the pocket 53 being the thinnest thickness part at the retainer 5. Note that since the distance between the gates 110 adjacent to each other is larger when the three pockets 53 are arranged than the two pockets 53, it is considered that the shift amount from the center position C1 of the weld line WL between the gates 110D and 110E is larger than the shift amount from the center position C2 of the weld line WL between the gates 110C and 110D.

According to the retainer 5 and the method for manufacturing the retainer as described above, one gate mark 54D (gate 110D) of the pair of gate marks 54D, 54E (gates 110D, 110E) adjacent to each other and having three pockets 53 disposed between the pair of gate marks 54D, 54E faces the reduced thickness part 55 (protruding part 100a) in the radial direction. According to such a configuration, in manufacturing the retainer 5, the second flow F2 of the molten resin material flowing in from the gate 110D is harder to flow than the first flow F1 of the molten resin material flowing in from the other gates 110A to 110C and 110E. As a result, between the gate marks 54D and 54E (gates 110D and 110E), the position of the weld line WL is deviated to the gate mark 54D (gate 110D) side. The weld line WL is disposed so as to be shifted from the center position C1 of the pocket 53 being the thinnest thickness part at the retainer 5. Therefore, a decrease in strength of the retainer 5 can be suppressed.

In the above-described manufacturing method, as the circumferential length, the radial length, and the depth of the protruding part 100a (circumferential length L1, radial length L2, and depth D of reduced thickness part 55) conforming to the outer shape of the reduced thickness part 55 increase, the cross-sectional area of the path decreases, the path allowing the molten resin material to flow. Therefore, in order to increase the difference in flowability of the molten resin material, it is preferable to increase the circumferential length, the radial length, and the depth of the protruding part 100a. In particular, the influence of the circumferential length is the largest on the decrease in the cross-sectional area of the path. Therefore, although there is a limit in response the size of the cavity 101, that is, the retainer 5, the circumferential position of the weld line WL can be adjusted by increasing the circumferential length, the radial length, and the depth of the protruding part 100a. For example, the circumferential length L1 of the reduced thickness part 55 is preferably set to be larger than the length of the grease pocket 52b similarly defined in the circumferential direction.

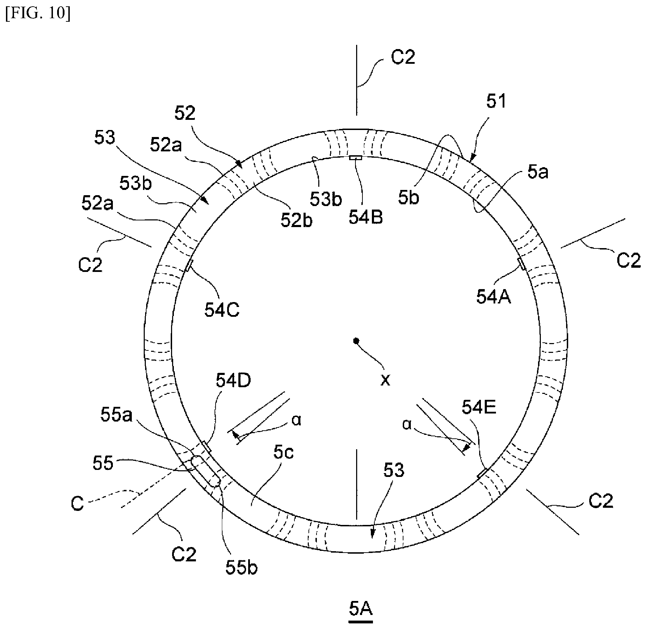

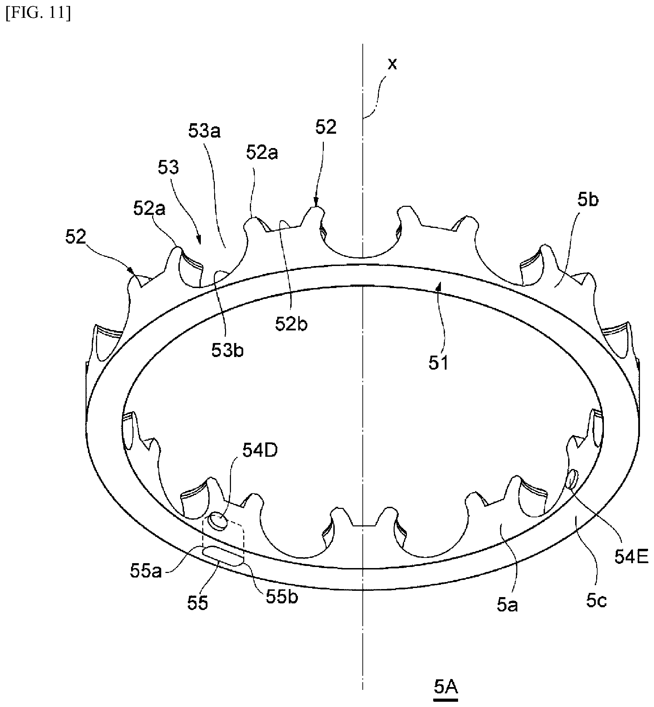

FIG. 10 is a bottom view schematically illustrating a structure of a retainer 5A according to a second specific example of the present invention. FIG. 11 is a perspective view schematically illustrating a structure of the retainer 5A according to the second specific example of the present invention. In the following drawings, the same components as the components of the retainer 5 according to the first specific example are denoted by the same reference numerals, and redundant description will be omitted. Hereinafter, a configuration of the retainer 5A according to the second specific example different from the retainer 5 according to the first specific example will be described. Note that although FIG. 10 is a bottom view of the retainer 5A, for convenience of explanation, the outer shapes of the column 52 and the pocket 53 seen through from the bottom surface 5c side of the retainer 5A are shown by dotted lines. As illustrated in FIGS. 10 and 11, the retainer 5A according to the second specific example is different from the retainer 5 according to the first specific example in that the pair of gate marks 54D and 54E having three pockets 53 disposed between the pair of gate marks 54D and 54E are shifted in the same circumferential direction from the center position C2 of the column 52 over a predetermined angular range. Other configurations of the retainer 5A of the second specific example are the same as the configurations of the retainer 5 of the first specific example.

Specifically, in the retainer 5A of the second specific example, the gate marks 54D and 54E are displaced in the clockwise direction over the angle α in the bottom view. However, the angles of deviation of the gate marks 54D and 54E are not necessarily the same. One gate mark 54D of the pair of gate marks 54E, 54D is disposed at the circumferential end part 55a side opposite to the circumferential end part 55b of the reduced thickness part 55 located at the other gate mark 54E side. In the second specific example, the center C of the gate mark 54D substantially coincides with the circumferential end part 55a of the reduced thickness part 55 in the circumferential direction. In this way, the gate mark 54D partially faces the reduced thickness part 55 in the radial direction. On the other hand, the other gate mark 54D of the pair of gate marks 54E, 54E is disposed so as to be deviated to the reduced thickness part 55 side in the circumferential direction from the center position C2 of the column 52, but the position of the gate mark 54E is disposed at the column 52 in the circumferential direction. Note that at the retainer 5A of the second specific example, the center C in the circumferential direction of the other gate mark 54E may coincide with the center position C2 of the column 52. In other words, only one of the gate marks 54D may be shifted in the circumferential direction.

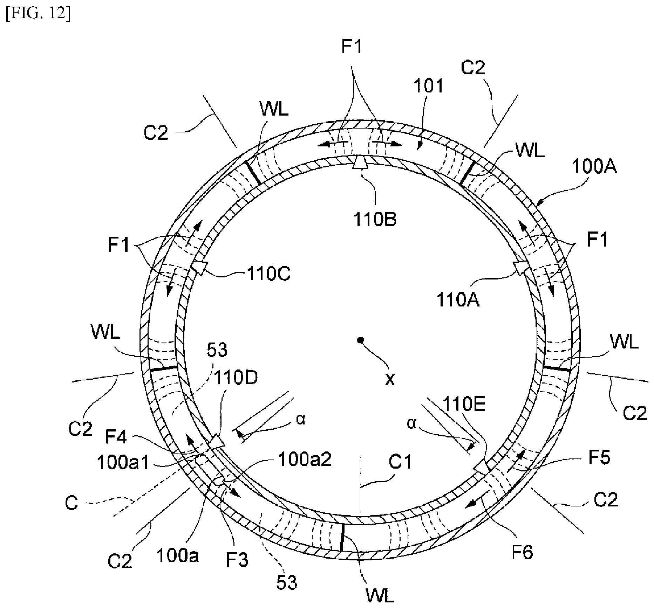

Next, a method for manufacturing the retainer 5A according to the second specific example of the present invention will be described. FIG. 12 corresponds to FIG. 8, and is a view schematically illustrating a structure of a mold 100A for manufacturing the retainer 5A according to the second specific example of the present invention. The mold 100A is different from the mold 100 described above in that the pair of gates 110D and 110E having the formation positions of the three pockets 53 arranged between the pair of gates 110D and 110E are circumferentially displaced in the same direction over a predetermined angular range from the center position C2 of the formation position of the column 52. Specifically, in bottom view, the gates 110D and 110E are shifted in the clockwise direction over the angle α. However, the shift angles of the gates 110D and 110E are not necessarily the same. One gate 110D of the pair of gates 110D and 110E is disposed at the circumferential end part (first circumferential end part) 100a1 side opposite to the circumferential end part (second circumferential end part) 100a2 of the protruding part 100a at the other gate 110E side. In the second specific example, the center C of the gate 110D substantially coincides with the circumferential end part 100a1 of the protruding part 100a in the circumferential direction. Thus, the gate 110D partially faces the protruding part 100a in the radial direction. On the other hand, the other gate 110E of the pair of gates 110D and 110E is arranged to be deviated to the protruding part 100a side in the circumferential direction, but the position of the gate 110E is disposed at the formation position of the column 52 in the circumferential direction.

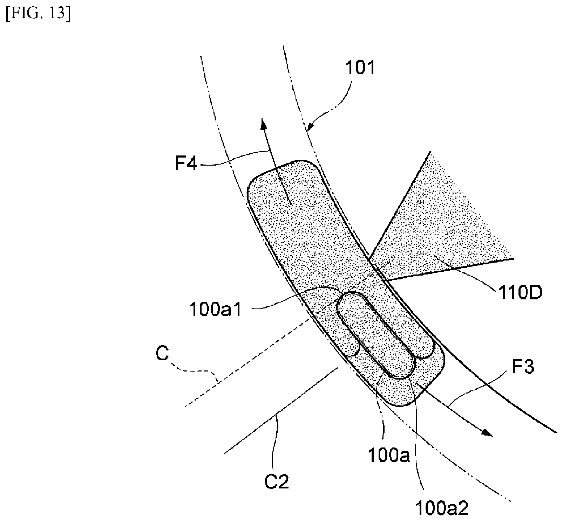

In manufacturing, the molten resin material is injected into the cavity 101 from each of the gates 110A to 110E at substantially the same time at a predetermined flow speed. FIG. 13 is a bottom view illustrating the outer shapes of the cavity 101 and the gate 110D of the mold 100 for manufacturing the retainer 5A according to the second specific example of the present invention. FIG. 13 illustrates the gate 110D and the protruding part 100a when viewed from the other side (lower side) along the axis line x in a partially enlarged manner. Referring also to FIG. 13, since the center C of the gate 110D substantially coincides with the circumferential end part 100a2 of the protruding part 100a in the circumferential direction, substantially the entire protruding part 100 is disposed at the path of the molten resin material from the gate 110D toward the gate 110E side. As a result, the cross-sectional area of the path of the molten resin material from the gate 110D toward the gate 110E side decreases. Thus, the protruding part 100a of the mold 100 becomes a resistance to the flow of the molten resin material in the cavity 101. On the other hand, the protruding part 100a is not disposed in the path of the molten resin material from the gate 110D toward the gate 110C side.

As a result, the third flow F3 of the molten resin material flowing from the gate 110D toward the gate 110E is relatively less likely to flow than the fourth flow F4 of the molten resin material flowing from the gate 110D toward the gate 110C. On the other hand, since the protruding part 100a is not disposed in the path of the molten resin material flowing in from the gates 110A to 110C, the first flow F1 of the molten resin material flowing in from the gates 110A to 110C flows toward the adjacent gate 110 as described above. In addition, since the gate 110E is disposed deviated to the protruding part 100a side in the circumferential direction, the fifth flow F5 and the sixth flow F6 of the molten resin material flow from the gate 110E toward the gates 110A and 110D, respectively.

Similarly to the first specific example, FIG. 12 illustrates the position of the weld line WL obtained by the simulation result performed on software for the retainer 5A according to the second specific example. Between the pair of gates 110A and 110B adjacent to each other in the circumferential direction, between the pair of gates 110B and 110C, between the pair of gates 110C and 110D, and between the pair of gates 110E and 110A adjacent to each other in the circumferential direction, the weld line WL is disposed at a position substantially equidistant from each gate 110 in the circumferential direction. That is, the weld line WL was formed at a position corresponding to the column 52 being a thick thickness part at the retainer 5. On the other hand, since the third flow F3 of the molten resin material from the gate 110D toward the gate 110E is relatively hindered between the pair of gates 110D and 110E, the position of the weld line WL between the gates 110D and 110E is arranged to be shifted from the center position C1 of the pocket 53 being the thinnest thickness part at the retainer 5. According to the retainer 5A and the method for manufacturing the retainer 5A as described above, reduction in strength of the retainer 5A is also suppressed as in the first specific example.

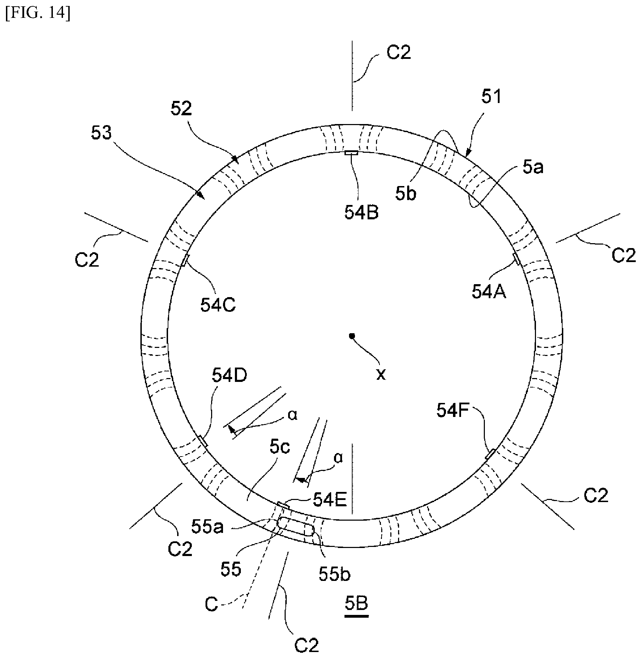

FIG. 14 is a bottom view schematically illustrating a structure of a retainer 5B according to a third specific example of the present invention. Hereinafter, the retainer 5B according to the third specific example will be described with respect to a configuration different from the retainers 5 and 5A according to the first and second specific examples. Note that FIG. 14 is a bottom view of the retainer 5B, and outer shapes of the column 52 and the pocket 53 are indicated by dotted lines for the sake of convenience of description. As illustrated in FIG. 14, the retainer 5B according to the third specific example is different from the retainers 5 and 5A according to the first and second specific examples in that six gate marks 54A to 54F are provided. In addition, an odd number, that is, one pocket 53 is arranged between the pair of gate marks 54D and 54E. On the other hand, an even number, that is, two pockets 53 are arranged between each of the pair of gate marks 54A and 54B, the pair of gate marks 54B and 54C, the pair of gate marks 54C and 54D, the pair of gate marks 54E and 54F, and the pair of gate marks 54F and 54A adjacent to each other in the circumferential direction. That is, in the third specific example, the number of pockets 53 arranged between the pair of gate marks 54D and 54E is smaller than the number of pockets 53 arranged between the other pair of gate marks 54 other than the pair of gate marks 54D and 54E.

Furthermore, the pair of gate marks 54D and 54E having one pocket 53 disposed between the pair of gate marks 54D and 54E are shifted in the same circumferential direction over a predetermined angular range from the center position C2 of the column 52. In bottom view, the gate marks 54D and 54E are shifted in the clockwise direction over the angle α. However, the shift angles of the gate marks 54D and 54E are not necessarily the same. One gate mark 54E of the pair of gate marks 54D and 54E is disposed at the circumferential end part (second circumferential end part) 55a side of the reduced thickness part 55 at the other gate mark 54D side. In the circumferential direction, the center C of the gate mark 54E substantially coincides with the circumferential end part 55a of the reduced thickness part 55. As a result, the gate mark 54E partially faces the reduced thickness part 55 in the radial direction. On the other hand, the other gate mark 54D of the pair of gate marks 54D and 54E is disposed to be deviated to the side opposite to the reduced thickness part 55 in the circumferential direction, but the position of the gate mark 54E is disposed at the column 52 in the circumferential direction. Note that similarly to the above-described specific example, the center C in the circumferential direction of the other gate mark 54D may coincide with the center position C2 of the column 52. In other words, only one of the gate marks 54E may be disposed shifted in the circumferential direction.

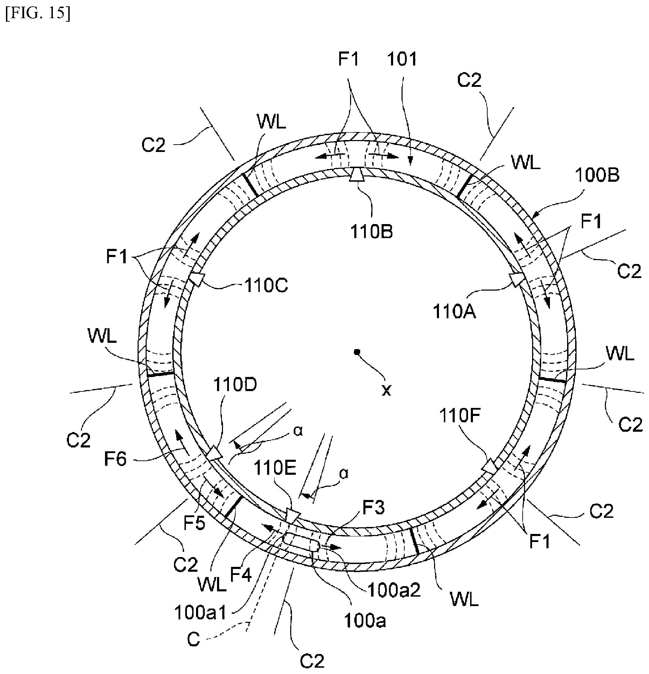

Next, a method for manufacturing the retainer 5B according to the third specific example of the present invention will be described. FIG. 15 corresponds to FIG. 8 and FIG. 12, and is a view schematically illustrating a structure of a mold 100B for manufacturing the retainer 5B according to the third specific example of the present invention. This mold 100B is different from the aforementioned molds 100 and 100A in that six gates 110A to 110F are connected to the cavity 101. In addition, the pair of gates 110D and 110E having the formation position of one pocket 53 arranged between the pair of gates 110D and 110E is shifted in the same circumferential direction over a predetermined angular range from the center position C2 of the formation position of the column 52. The positions of the gates 110A to 110F in the circumferential direction coincide with the gate marks 54A to 54F at the retainer 5B, respectively. In the third specific example, the gates 110D and 110E are shifted in the clockwise direction over the angle α in bottom view. In the circumferential direction, the center C of one gate 110E of the pair of gates 110D and 110E substantially coincides with the circumferential end part (second circumferential end part) 100a1 of the protruding part 100a at the other gate 110D side of the pair of gates 110D and 110E. As a result, the gate 110E partially faces the protruding part 100a in the radial direction. On the other hand, the other gate 110D is disposed deviated to the side opposite to the protruding part 100a in the circumferential direction, but the position of the gate 110E is disposed at the formation position of the column 52 in the circumferential direction.

In manufacturing, the molten resin material is injected into the cavity 101 from each of the gates 110A to 110F at substantially the same time at a predetermined flow speed. As shown in the simulation result of FIG. 15, the position of the weld line WL substantially coincides with the center position C2 of the formation position of the column 52 between the pair of gates 110A and 110B, between the gates 110B and 110C, between the gates 110C and 110D, between the gates 110E and 110F, and between the gates 110F and 110A, each pair having two pockets 53 disposed between the pair of gates. On the other hand, since the gate 110E faces the second circumferential end part 100a1 of the protruding piece 100a between the pair of gates 110D and 110E, the fourth flow F4 of the molten resin material from the gate 110E toward the gate 110D relatively easily flows as compared with the third flow F3 of the molten resin material from the gate 110E toward the gate 110F. On the other hand, although the gate 110D does not face the protruding piece 100a, due to the shift in the circumferential direction, the gate 110C side from the gate 110D becomes a thin thickness part of the formation position of the pocket 53, and the gate 110E side from the gate 110D becomes a thick thickness part of the formation position of the column 52. That is, the volume the cavity 101 is filled until the fifth flow F5 of the molten resin material from the gate 110D toward the gate 110E side forms the weld line WL is relatively large as compared with the case of the position of the gate 110D substantially coinciding with the center position C2 of the formation position of the column 52. As a result, the weld line WL is disposed shifted in the circumferential direction from the center position C1 of the pocket 53 being the thinnest thickness part at the retainer 5. According to the retainer 5B and the method for manufacturing the retainer 5B as described above, a decrease in strength of the retainer 5B is suppressed similarly to the first and second specific examples.

The retainers 5 and 5A according to the first and second specific examples have five gate marks 54A to 54E (gates 110A to 110E), and three pockets 53 are arranged between the pair of gate marks 54D and 54E. On the other hand, the retainer 5B according to the third specific example has six gate marks 54A to 54F (gates 110A to 110F), and the three pockets disposed between the pair of gate marks 54D and 54E of the retainers 5 and 5A are arranged between the gate marks 54D, 54E, and 54F of the retainer 5B, and thus one pocket 53 is disposed between the gate marks 54D and 54E of the retainer 5B. That is, the number of pockets 53 disposed between the gate marks 54 is reduced. As a result, since the moving distance of the molten resin material flowing between the gates 110 is reduced, the filling pressure of the molten resin material flowing in the cavity 101 can be increased. Therefore, the retainer 5B according to the third specific example can further suppress a decrease in strength as compared with the retainers 5 and 5A according to the first and second specific examples.

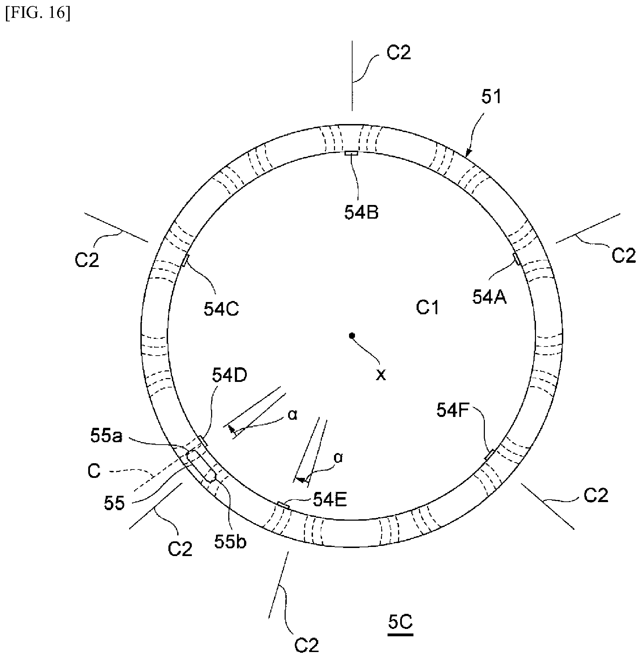

FIG. 16 is a bottom view schematically illustrating a structure of a retainer 5C according to a fourth specific example of the present invention. Hereinafter, a configuration of the retainer 5C according to the fourth specific example different from the configuration of the retainer 5B according to the third specific example will be described. Note that FIG. 16 is a bottom view of the retainer 5C, and outer shapes of the column 52 and the pocket 53 are indicated by dotted lines for the sake of convenience of description. As illustrated in FIG. 16, the retainer 5C according to the fourth specific example is different from the retainer 5B according to the third specific example in that the reduced thickness part 55 faces not the gate mark 54E but the gate mark 54D. Specifically, one gate mark 54D of the pair of gate marks 54D and 54E is disposed at the circumferential end part (first circumferential end part) 55a side of the reduced thickness part 55 opposite to the other gate mark 54E. In the circumferential direction, the center C of the gate mark 54D substantially coincides with the circumferential end part 55a of the reduced thickness part 55. In this way, the gate mark 54D partially faces the reduced thickness part 55 in the radial direction.

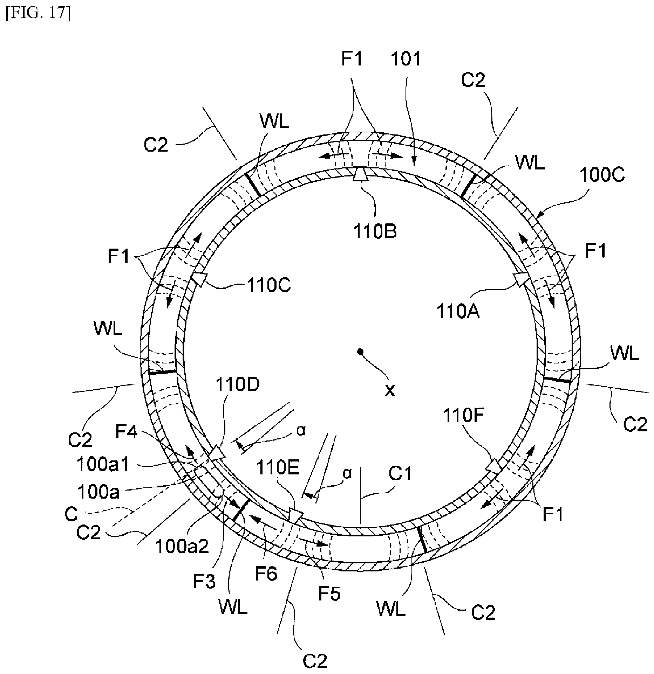

Next, a method for manufacturing the retainer 5C according to the fourth specific example of the present invention will be described. FIG. 17 corresponds to FIG. 15, and is a view schematically illustrating a structure of a mold 100C for manufacturing the retainer 5C according to the fourth specific example of the present invention. At the mold 100C, as compared with the mold 100B described above, the protruding piece 100a conforming to the outer shape of the reduced thickness part 55 faces not the gate 110E but the gate 110D. Specifically, in the circumferential direction, the center C of the gate 110D substantially coincides with the circumferential end part (first circumferential end part) 100a1 of the protruding part 100a at the side opposite to the end part 100a2 at the other gate 110E side. At substantially the same time from each gate 110A to 110F, molten resin material is injected into the cavity 101 at a predetermined flow speed. As a result, as shown in the simulation result of FIG. 17, substantially similar position of the weld line WL as in the case of the third specific example was secured.

Specifically, between the pair of gates 110D and 110E arranged shifted in the clockwise direction, the gate 110D faces the end part 100a1 of the protruding piece 100a, and thus the third flow F3 of the molten resin material from the gate 110D toward the gate 110E is relatively less likely to flow compared to the fourth flow F4 of the molten resin material from the gate 110D toward the gate 110C. As a result, the weld line WL was disposed shifted from the center position C1 of the pocket 53 being the thinnest thickness part at the retainer 5C. According to the retainer 5C and the method for manufacturing the retainer 5C as described above as well, a decrease in strength of the retainer 5C is suppressed as in the first to third specific examples.

Although the embodiment of the present invention has been described above, the present invention is not limited to the rolling bearings 5, 5A, 5B, and 5C according to the embodiment of the present invention, and includes all aspects included in the concept of the present invention and the claims. Further, the configurations may be selectively combined as appropriate so as to achieve at least part of the problems and the effects described above. For example, a shape, a material, an arrangement, a size, and the like of each of the configurations in the embodiments described above may be changed as appropriate according to a specific usage aspect of the present invention.

### Reference Signs List

1 rolling bearing, 2 inner ring, 21 inner ring raceway, 3 outer ring, 31 outer ring raceway, 4 rolling element, 5, 5A, 5B, 5C retainer, 5a inner circumferential surface, 5b outer circumferential surface, 5c bottom surface, 51 base, 52 column, 52a claw part, 52b grease pocket, 53 pocket, 53a open part, 53b spherical surface, 54A to 54F gate mark, 55 reduced thickness part, 55a circumferential end part, 55b circumferential end part, 100 mold, 100a protruding part, 100a1 circumferential end part, 100a2 circumferential end part, 101 cavity, 110A to 110F gate, C center, C1 center position, C2 center position, x axis line, WL weld line

## Claims

1. A retainer for a rolling bearing, the retainer comprising:
a base extending annularly in a circumferential direction around an axis line;
a plurality of columns extending from the base along the axis line and arrayed in the circumferential direction;
a plurality of pockets each formed between a pair of the columns adjacent to each other;
a reduced thickness part being a part recessed from the base or the column toward an inside of the column at a position corresponding to the column; and
a plurality of gate marks formed at the column or the base adjacent to the column, the plurality of gate marks corresponding to gate positions in molding the retainer; wherein
at least one of the plurality of gate marks is formed at the column or the base adjacent to the column corresponding to the reduced thickness part.

2. The retainer according to claim 1, wherein one of a pair of the gate marks adjacent to each other and having an odd number of the pockets disposed between the pair of the gate marks faces the reduced thickness part in a radial direction orthogonal to the axis line.

3. The retainer according to claim 2, wherein the reduced thickness part includes a first circumferential end part and a second circumferential end part located at another gate mark side, and the one of the pair of the gate marks is disposed at the first circumferential end part side.

4. The retainer according to claim 3, wherein the pair of the gate marks are shifted from a center of the column in an identical circumferential direction.

5. The retainer according to claim 3, wherein the number of the pockets disposed between the pair of the gate marks is smaller than the number of the pockets disposed between another pair of the gate marks adjacent to each other, the other pair of the gate marks being different from the pair of the gate marks.

6. The retainer according to claim 2, wherein the reduced thickness part includes a first circumferential end part and a second circumferential end part located at the other gate mark side, and the one of the pair of the gate marks is disposed at the second circumferential end part side.

7. The retainer according to claim 6, wherein the pair of the gate marks are shifted from a center of the column in an identical circumferential direction.

8. The retainer according to claim 6, wherein the number of the pockets disposed between the pair of the gate marks is smaller than the number of the pockets disposed between another pair of the gate marks adjacent to each other, the other pair of the gate marks being different from the pair of the gate marks.

9. A rolling bearing comprising:
an inner ring, an outer ring disposed at an outer side of the inner ring, a plurality of rolling elements disposed between the inner ring and the outer ring, and
the retainer according to any one of claims 1 to 8, the retainer accommodating each of the plurality of rolling elements at the pocket between the inner ring and the outer ring.

10. A method for manufacturing a retainer, the method comprising:
injecting a resin material from a plurality of gates into a cavity of a mold imitating an outer shape of a retainer of a rolling bearing; and
curing the resin material within the cavity to form the retainer; wherein
the cavity imitates outer shapes of a base extending annularly in a circumferential direction around an axis line, a plurality of columns extending from the base along the axis line and arrayed in the circumferential direction, a plurality of pockets each formed between a pair of the columns adjacent to each other, and a reduced thickness part recessed from the base or the column toward an inside of the column at a position corresponding to the column, and
each of the plurality of gates is disposed at the column or the base adjacent to the column, and at least one of the plurality of gates is formed at the column or the base adjacent to the column corresponding to an outer shape of the reduced thickness part.

11. The method for manufacturing the retainer according to claim 10, wherein in the cavity, one of a pair of the gates adjacent to each other and having an outer shape of an odd number of the pockets disposed between the pair of the gates faces the outer shape of the reduced thickness part in a radial direction orthogonal to the axis line.

12. The method for manufacturing the retainer according to claim 11, wherein the outer shape of the reduced thickness part includes a first circumferential end part and a second circumferential end part located at another gate side of the pair of the gates, and the one of the pair of the gates is disposed at the first circumferential end part side.

13. The method for manufacturing the retainer according to claim 12, wherein the pair of the gates are shifted from a center of the column in an identical circumferential direction.

14. The method for manufacturing the retainer according to claim 12, wherein the number of the pockets disposed between the pair of the gates is smaller than the number of the pockets disposed between another pair of the gates adjacent to each other, the other pair of the gates being different from the pair of the gates.

15. The method for manufacturing the retainer according to claim 11, wherein the outer shape of the reduced thickness part includes a first circumferential end part and a second circumferential end part located at the other gate side, and the one of the pair of the gates is disposed at the second circumferential end part side.

16. The method for manufacturing the retainer according to claim 15, wherein the pair of the gates are shifted from a center of the column in an identical circumferential direction.

17. The method for manufacturing the retainer according to claim 15, wherein the number of the pockets disposed between the pair of the gates is smaller than the number of the pockets disposed between another pair of the gates adjacent to each other, the other pair of the gates being different from the pair of the gates.

18. A mold for defining a cavity imitating an outer shape of a retainer of a rolling bearing, wherein
the cavity imitates outer shapes of a base extending annularly in a circumferential direction around an axis line, a plurality of columns extending from the base along the axis line and arrayed in the circumferential direction, a plurality of pockets each formed between a pair of the columns adjacent to each other, and a reduced thickness part recessed from the base or the column toward an inside of the column at a position corresponding to the column;
a plurality of gates each being connected to the cavity at a position corresponding to a different one of the plurality of columns; and
at least one of the plurality of gates is formed at the column or the base adjacent to the column corresponding to an outer shape of the reduced thickness part.

19. The mold according to claim 18, wherein each of the plurality of gates is connected to the cavity at a position corresponding to the column, and one of a pair of the gates adjacent to each other and having an odd number of the pockets disposed between the pair of the gates faces the reduced thickness part in a radial direction orthogonal to the axis line.
